Europäisches Patentamt

European Patent Office

Office européen des brevets

(19)

(11) Publication number : **0 282 356 B1**

# (12) EUROPEAN PATENT SPECIFICATION

(45) Date of publication of patent specification :
07.12.94 Bulletin 94/49

(51) Int. Cl.[5] : **G11B 13/04, G11B 11/10**

(21) Application number : 88302220.4

(22) Date of filing : 14.03.88

(54) **Magneto-optical recording medium and method.**

(30) Priority : **13.03.87 JP 56718/87**
**13.03.87 JP 56719/87**

(43) Date of publication of application :
14.09.88 Bulletin 88/37

(45) Publication of the grant of the patent :
07.12.94 Bulletin 94/49

(84) Designated Contracting States :
**DE FR GB IT NL**

(56) References cited :
**EP-A- 0 258 978**
**DE-A- 3 619 618**
**US-A- 3 488 167**
**US-A- 4 103 315**
**US-A- 4 559 573**
**PATENT ABSTRACTS OF JAPAN vol. 10, no.**
**34 (P-427)(2091) 08 February 1986, & JP-A-60**
**182536 (SONY K.K.) 18 September 1985,**

(56) References cited :
**JAPANESE JOURNAL OF APPLIED PHYSICS**
**vol. 20, no. 11, November 1981, TOKYO,**
**JPpages 2089 - 2095; T. KOBAYASHI et al.:**
**"Magnetization process of exchange-coupled**
**ferrimagnetic double-layered films"**
**IEEE TRANSACTIONS ON MAGNETICS vol.**
**MAG11, no. 4, July 1975, New York, US**
**pages996 - 1017; A. E. BERKOWITZ et al.:**
**"Thermomagnetic recording: Physics**
**andMaterials "**
**IEEE TRANSACTIONS ON MAGNETICS vol.**
**MAG10, no. 4, December 1974, New York,**
**USpages 1033 - 1038; N.M. SALANSKY:**
**"Some Magnetooptical and HF Properties**
**ofMagnetic Films"**

(73) Proprietor : **CANON KABUSHIKI KAISHA**
**30-2, 3-chome, Shimomaruko,**
**Ohta-ku**
**Tokyo (JP)**

(72) Inventor : **Osato, Yoichi**
**8-5-203, Sasage 1-Chome**
**Konan-ku Yokohama-shi Kanagawa-ken (JP)**

(74) Representative : **Beresford, Keith Denis Lewis**
**et al**
**BERESFORD & Co.**
**2-5 Warwick Court**
**High Holborn**
**London WC1R 5DJ (GB)**

EP 0 282 356 B1

## Description

## BACKGROUND OF THE INVENTION

Field of the Invention

The present invention relates to magneto-optical recording medium having a recording layer of two-layer magnetic film for recording information by radiation of light beam, and recording method using the same.

Related Background Art

Research and development of an optical memory element which uses a laser beam to realize a high density and large capacity memory have been rapidly done. Among others, a magneto-optical recording medium is advisable as a rewritable optical memory element.

However, when information recorded on such a magneto-optical recording medium is to be rewritten, the information should be erased and then new information should be recorded. Namely, overwriting of information cannot be attained. For example, when information on a predetermined track on a magneto-optical disk is to be rewritten, the information on the track is erased in one revolution of the disk and then new information is written in the next revolution.

As a result, a recording speed is low.

In order to solve the above problem, separate record/reproduce head and erase head are provided in the prior art apparatus, or information is recorded while a magnetic field applied with a continuous laser beam is modulated. However, such an apparatus is of large scale and high cost or cannot attain high speed modulation.

On the other hand, Japanese Laid-Open Patent Application No. 175948/1987 (corresponding to DE-OS No. 3,619,618) discloses a magneto-optical recording medium according to the preamble of claim 1 and a recording method using the same which enable over-writing like a magnetic recording medium by providing simple magnetic field generation means in the conventional apparatus.

EP-A-0258978 (CANON), which was published after the present priority date and is thus only in the state of the art under Article 54(3), also discloses an overwriteable magnetic recording medium whereby the documents as for as supported by priority documents being filed before the priority date of the present applicant do not mention any of the features according to the characterising part of claim 1.

EP-A-0257530 (SONY), which was published after the present priority date and is thus only in the state of the art under Article 54(3) likewise discloses an overwriteable magnetic recording medium.

In all three cases, the medium comprises a pair of layers; a first primarily concerned with retaining data for readout and a second having a higher Curie temperature and lower coercive force, which applies a biasing magnetic field to the first at high temperatures. At room temperature, the coercive forces of both layers are larger than the magnetic coupling force exerted on each, so they can stably coexist either parallel or antiparallel. Both the layers comprise an alloy of a rare earth element and a transition metal.

The present invention provides an improved medium of the above type in which the second layer is alloyed with an elements which does not exihibit ferromagnetism at ambient temperature, the non-ferromagnetic element being one or more of the group consisting of Cu, Ag, Ti, Mn, B, Pt, Si, Cr, Al and Ge. This reduces the exchange force acting on the second layer, enabling a lower coercive force material to be used. Claim 9 contains a method of manufacturing a medium according to the invention. Claim 10 contains a recording method using a medium according to the invention.

## BRIEF DESCRIPTION OF THE DRAWINGS

Fig. 1 shows a sectional view of one embodiment of a magneto-optical recording medium of the present invention,

Fig. 2 shows a temperature characteristics of coercive forces of magnetic layers of the medium shown in Fig. 1,

Fig. 3 shows magnetization status in a recording step using the medium of Fig. 1,

Fig. 4 shows a conceptual view of a recording and reproducing apparatus which uses the medium of Fig. 1.

Fig. 5 shows magnetization status in a recording step when another embodiment of recording medium is used, and

Fig. 6 shows a sectional view of other embodiment of a magneto-optical recording medium of the present invention which has a protection layer.

## DETAILED DESCRIPTION OF THE PREFERRED EMBODIMENTS

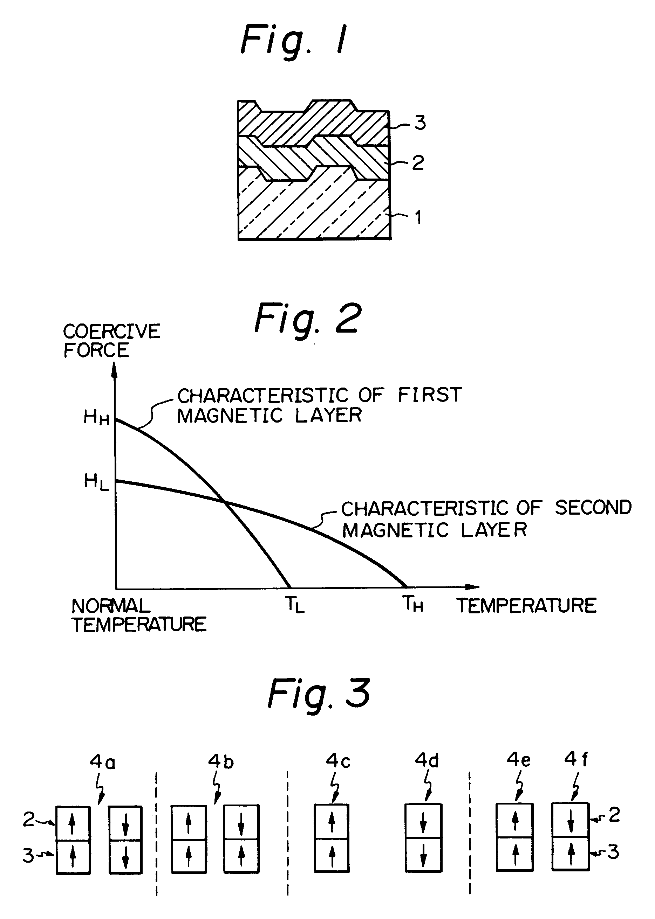

Fig. 1 shows a sectional view of one embodiment of the magneto-optical recording medium of the present invention. The magneto-optical recording medium of Fig. 1 has a first magnetic layer 2 and a second magnetic layer 3 laminated on a pre-grooved transparent substrate 1. The first magnetic layer 2 has a low curie point $T_L$ and a high coercive force $H_H$, and the second magnetic layer 3 has a high curie point $T_H$ and a low coercive force $H_L$. The terms high and low mean relative relations when both magnetic layers are compared. (The coercive forces are compared at a room temperature.) The relations are shown in Fig. 2. Usually, $T_L$ and $H_H$ of the first magnetic layer 2 are selected to 70 - 180°C and 3 - 10K Oe (240 - 800 K A/m), respectively, and $T_H$ and $H_L$ of the second magnetic layer are selected to 100 - 400°C and 0.5 - 2K Oe (40 - 160 K A/m), respectively.

A principal composition of each of the magnetic layers is amorphous magnetic alloy of a rare earth element and a transition metal element which exhibits perpendicular magnetic anisotropy and magneto-optical effect. Examples are GdCo, GdFe, TbFe, DyFe, GdTbFe, TbDyFe, GeTbFeCo, TbFeCo and GdTbCo, etc.

In a recording method which uses the magneto-optical recording medium of the present invention, the first magnetic layer 2 primarily contributes to the reproduction. Namely, the magneto optical effect exhibited by the first magnetic layer 2 is primarily utilized for the reproduction, and the second magnetic layer 3 plays an important role in recording information.

In the two-layer film of the recording medium of the present invention, the following relation must be met:

$$H_H > H_L > \frac{\sigma_w}{2M_s h}$$

where $M_s$ is a saturation magnetization of the second magnetic layer 3, h is a thickness of the second magnetic layer 3, and $\sigma_w$ is a magnetic wall energy between the two magnetic layers.

The above relation should be met in order for magnetization of bits at the end of recording (shown by 4f in Fig. 3) to exist stably.

The thicknesses coercive forces, saturation magnetization of the magnetic layers (perpendicular magnetization layers) 2 and 3 and the magnetic wall energy may be appropriately selected to meet the above relation. Practically and specifically, the solution magnetization $M_s$ of the second magnetic layer is selected to be large, the film thickness h thereof is selected to be large or the magnetic wall energy $\sigma_w$ is selected to be small. However, when the film thickness h is large, a sensitivity of the magneto-optical recording medium is lowered. Further, when the saturation magnetization is large, the coercive force $H_L$ is lowered. Experimentarily, when $H_L$ is lower than 1K Oe (80000 A/m), it tends to be $H_L < \sigma_w/2M_s h$.

Accordingly, the best practical way is to reduce the magnetic wall energy $\sigma_w$. As taught in EP-A-0258978, when an intermediate layer of a non-magnetic element is provided between the first magnetic layer 2 and the second magnetic layer 3, an exchange coaction through the intermediate layer is substantially reduced even if it is only of several tens Å thickness, and an apparent $\sigma_w$ is lowered.

However, in actual, a magneto-optical recording medium having an appropriate $\sigma_w$ cannot be prepared with high reproducibility.

In the experiment done by the inventor of the present invention, a non-magnetic element was added to the second magnetic layer. It was found that since the material which reduced the exchange coaction was dispersed in the layer, the exchange force acting on the second magnetic layer through the magnetic walls of the first and second magnetic layers was reduced as it was by the intermediate layer and that the exchange force acting on the second magnetic layer could be set with high reproducibility unlike the case where the intermediate layer was used.

The non-magnetic element may be one which hardly affects to $M_s$ of the second magnetic layer when it is added thereto (that is, hardly lowers $M_s$ and currie point). Examples are one or more of Cu, Ag, Ti, Mn, B, Pt, Si and etc. Amount of addition is preferably 2 - 70 atomic % to the second magnetic layer, and more preferably 5 - 20 atomic %. The drop of the curie point due to the addition of the non-magnetic element is preferably held within 30°C.

The drop of the Curie point is considered to be caused primarily by alloying of the added non-magnetic element and the rare earth element or transition metal of the second magnetic layer. Further, study was done to prevent such drop and it was found effective to separately provide an evaporation source for the rare earth element or transition metal element and an evaporation source for the non-magnetic element in forming the second magnetic layer and form the layer by a conventional sputtering method, ion beam vapor deposition or sputtering method, electron beam evaporation deposition method, or cluster beam evaporation deposition method while the substrate is rotated. With this method, the drop of the Curie point is small even if a large amount of non-magnetic element is added, and the apparent $\sigma_w$ can be reduced without adverse effect by the reduction of $M_s$, that is, adverse effects to the record sensitivities and record status of the first and second magnetic layers. The reason therefor is considered that a laminated structure of the rare earth-transition metal element and the non-magnetic element is formed when viewed microscopically.

The magnetic layers 2 and 3 are preferably exchange-coupled while taking a magnitude of an effective biasing magnetic field in a recording step and stability of binary record bits into account.

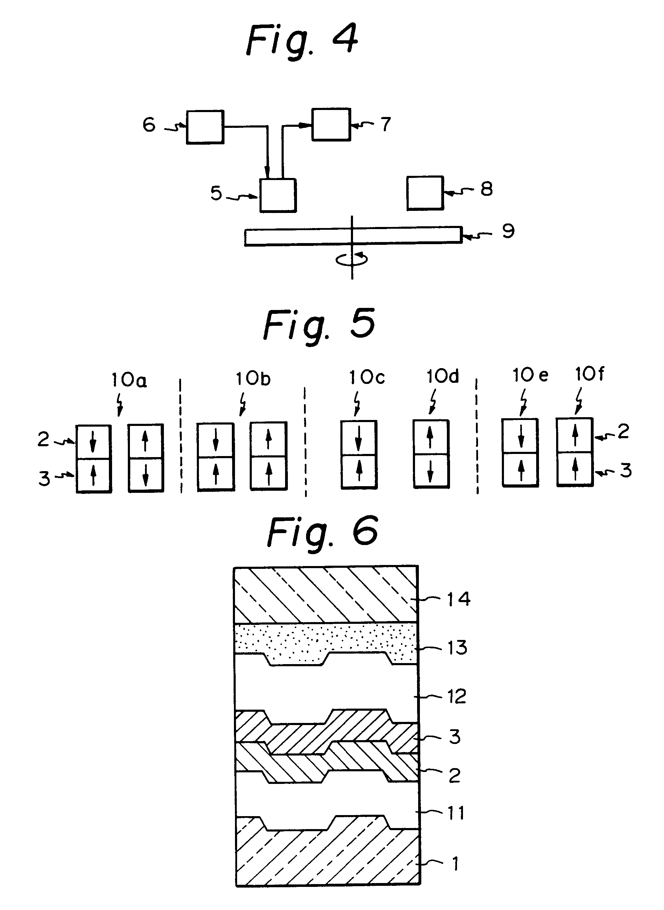

The recording method using the magneto-optical recording medium of the present invention is explained with reference to Figs. 2 to 4. Fig. 3 shows directions of magnetizations of the magnetic layers 2 and 3 in the recording step, and Fig. 4 shows a block diagram of the recroding apparatus. Before recording, the stable directions of magnetizations of the magnetic layers 2 and 3 may be either parallel (same direction) or anti-parallel (opposite directions). In Fig. 3, the stable directions of magnetizations are parallel.

In Fig. 4, numeral 9 denotes a magneto-optical disk having the above construction. It is assumed that initial magnetization of a portion of the magnetic layers is that shown by 4a in Fig. 3. The magneto-optical disk 9 is rotated by a spindle motor and passes through a magnetic field generation unit 8. If magnitude of the magnetic field of the magnetic field generation unit 8 is set between the coercive forces of the magnetic layers 2 and 3 (the direction of the magnetic field is upward in the present embodiment), the second magnetic layer 3 is magnetized in a uniform direction as shown by 4b in Fig. 3 while the magnetization of the first magnetic layer 2 is kept unchanged.

When the magneto-optical disk 9 rotates and passes through a record/reproduce head 5, a laser beam of one of two laser powers is irradiated to the disk plane in accordance with a signal from a record signal generator 6. The first laser power is large enough to heat the disk to a vicinity of the curie point of first magnetic layer 2, and the second laser power is large enough to heat the disk to a vicinity of the curie point of the second magnetic layer. In Fig. 2 which shows the relation between the coercive forces of the magnetic layers 2 and 3 and a temperature, the first laser power can heat the disk to the vicinity of $T_L$ and the second laser power can heat the disk to the vicinity of $T_H$.

The first magnetic layer 2 is heated by the first laser power to the vicinity of the curie point. Since the second magnetic layer 3 has a coercive force at this temperature which allows stable existence of bits, the bits shown by 4c in Fig. 3 are formed from 4b of Fig. 3 by properly setting a recording biasing magnetic field.

(First preliminary recording)

The proper setting of the biasing magnetic field is explained below. In the first preliminary recording, a force (exchange force) to arrange the magnetization of the first magnetic layer 2 is applied in a direction stable to the magnetization of the second magnetic layer 3 (the same direction in the present embodiment) and hence the biasing magnetic field is not necessary in principle. However, in preliminary recording which uses the second laser power, the biasing magnetic field is not in a direction to assist the reversal of magnetization of the second magnetic layer 3 (the direction to impede the first preliminary recording). It is advisable that the magnitudes and directions of the biasing magnetic fields in the preliminary recordings by the first and second laser powers are same.

In view of the above, it is advisable that the biasing magnetic field is set to a minimum level required for the preliminary recording by the second laser power by the following principle. The proper setting of the biasing magnetic field is done while taking those factors into consideration.

The second preliminary recording is explained. When the disk is heated by the second laser power to the vicinity of the curie point of the second magnetic layer 3 (second preliminary recording), the magnetization of the second magnetic layer 3 is reversed by the biasing magnetic field which has been set in the manner described above. Then, the magnetization of the first magnetic layer 2 is arranged in a direction stable to the second magnetic layer 3 (the same direction in the present embodiment). The bits shown by 4d in Fig. 3 are formed from 4b of Fig. 3.

In this manner, each area of the magneto-optical disk is preliminarily recorded into the state 4c or 4d of Fig. 3 by the biasing magnetic field and the first or second laser power selected in accordance with the signal.

As the magneto-optical disk 9 is rotated so that the bits 4c and 4d of the preliminary recording again pass through the magnetic field generation unit 8, the recorded bits 4c do not change because the magnitude of the magnetic field of the magnetic field generation unit 8 has been set between the coercive forces of the magnetic layers 2 and 3. (Final record status). On the other hand, the recorded bits 4d are changed to 4f because the magnetization of the second magnetic layer 3 is reversed. (another final record status).

In order for the recorded bit status of 4f to exist stably, the following relaiton should be met.

$$\frac{\sigma_w}{2M_s h} < H_L < H_H$$

where $M_s$ is the magnitude of saturation magnetization of the second magnetic layer 3, h is the thickness there-

of, $\sigma_w$ is the magnetic wall energy between the magnetic layers 2 and 3, and $\sigma_w/2M_sh$ is a strength of the exchange force acting on the second magnetic layer. The magnetic field having the magnitude of $\sigma_w/2M_sh$ tends to change the direction of the second magnetic layer 3 to the direction stable to the magnetization of the first magnetization layer 2 (the same direction in the present embodiment). In order for the magnetization of the second magnetic layer 3 not to be reversed by this magnetic field, the coercive force $H_L$ of the second magnetic layer 3 should meet the relation of $H_L > \sigma_w/2M_sh$.

Since the recorded bit status 4e and 4f are controlled by the laser power in the recording step and do not depend on the status prior to the recording, the overwriting can be attained. The recorded bits 4e and 4f can be reproduced by irradiating a reproducing laser beam and processing a reproduced light by a record signal reproducing unit 7.

In the embodiment of Fig. 3, the magnetization is stable when the directions of magnetization of the first magnetic layer 2 and the second magnetic layer 3 are same. A magnetic layer whose magnetization is stable when the magnetizations of the first and second magnetization layers are anti-parallel may also be used. Fig. 5 shows magnetization status in the recording step of such a magnetic medium. In Fig. 5, 10a - 10f correspond to 4a - 4f of Fig. 3.

Fig. 6 shows a sectional view of another embodiment of the magneto-optical recording medium of the present invention. In Fig. 6, the like elements to those shown in Fig. 1 are designated by the like numerals and the explanation thereof is omitted. A protection layer 11 is provided between the substrate 1 and the first magnetic layer 2. Another protection layer 12 is provided on the second magnetic layer 3. A bonding substrate 14 is bonded thereto through an adhesive layer 13. This arrangement improves an anti-corrosion property of the medium. The protection layers preferably have a thickness of 200 Å or more. Material of the protection layers is fine non-magnetic material which is usually inorganic dielectric material such as $Si_3N_4$, SiC, ZnS, AℓN, SiO, $Aℓ_2O_3$, $Cr_2O_3$, Si or Ge etc.

Example 1

A pregrooved and preformatted polycarbonate disk-shaped substrate was set in a sputtering device having three target sources with a distance to the target being set to 10cm, and the substrate was rotated.

Air in the sputtering device was evacuated to $1 \times 10^{-6}$ Torr ($1,33 \times 10^{-4}$ Pa) or lower, and a ZnS protection layer was formed to a thickness of 1000 Å by the first target in argon at a sputtering rate of 100 Å/min and a sputtering pressure of $5 \times 10^{-3}$ Torr ($6,66 \times 10^{-1}$ Pa). Then, a TbFe alloy was sputtered in argon by the second target at a sputtering rate of 100 Å/min and a sputtering pressure of $5 \times 10^{-3}$ Torr (0,66 Pa) to form a first magnetic layer having a film thickness of 300 Å, $T_L$ of approximately 140°C and $H_H$ of approximately 10 KOe (800000 A/m) and composition of $Tb_{18}Fe_{82}$ with Fe element sub-lattice magnetization preference.

Then, a TbFeCuCo alloy was sputtered in argon at a sputtering pressure of $5 \times 10^{-3}$ Torr (0,66 Pa) to form a second magnetic layer having a film thickness of 500 Å, $T_H$ of approximately 200°C and $H_L$ of approximately 1 KOe and composition of $Tb_{18.4}Fe_{56}Co_{5.6}Cu_{20}$ with Tb element sub-lattice magnetization preference.

Then, a ZnS protection layer having a thickness of 3000 Å was formed in argon by the first target at a sputtering rate of 100 Å/min and a sputtering pressure of $5 \times 10^{-3}$ Torr (0,66 Pa).

Then, the substrate was bounded to a polycarbonate bonding substrate by hot melt adhesive material to complete a sample of the magneto-optical disk.

The magneto-optical disk was loaded to a recording and reproducing apparatus and rotated past a magnetic field generation unit of 2.5K Oe (200 000 A/m) at a linear speed of approximately 8 m/sec and information was recorded by laser powers of 4 mW and 8 mW while the laser beam having a wavelength of 830 nm focused to approximately 1 μm was modulated at 2 MHz with a duty factor of 50 %. The biasing magnetic field was at 100 Oe (8000 A/m). Then, the information was reproduced by irradiating a lsaer beam of 1.5 mW to reproduce a binary signal.

The same experiment was done for the magneto-optical disk having information recorded on the entire surface. The signal component of the previously recorded signal was not detected and the overwriting was attained.

Example 2 and Comparative Example

A sample of magneto-optical disk having the same composition, film thicknesses and coercive forces as those of the Example 1 was formed in the same manner as that of the Example 1 except for the type and amount of the non-magnetic element to be added to the second magnetic layer being changed as shown in Table 1.

In order to examine the stability of the recorded bits 4f of Fig. 3 for the samples including that of the Example 1, the magnitude of the magnetic field at which the magnetizations of the first and second magnetic layers are reversed were checked while the external magnetic field was applied. Then, the stability of the recorded bits 4f without application of the external magnetic field was examined. In table 1, o indicates stable and x indicate not stable.

For each of the samples shown in Table 1, only the film thickness of the second magnetic layer was changed to prepare a new sample, and the film thickness of the second magnetic layer at which the recorded bits 45 started to be unstable was checked. The results are shown in Table 1.

Table 1

| Sample | Element added to second magnetic layer | Composition of second magnetic layer | Stability of bits 4f | Film thickness (Å) at which instability starts |
|---|---|---|---|---|
| Example 1 | Cu | $Tb_{18.4}Fe_{54.6}Co_7Cu_{20}$ | o | 200 |
| Comparative example | None | $Tb_{23}Fe_{70}Co_7$ | o | 450 |
| Example 2-1 | Cu | $Tb_{22}Fe_{66}Co_7Cu_5$ | o | 300 |
| 2-2 | Cu | $Tb_{21}Fe_{62}Co_7Cu_{10}$ | o | 250 |
| 2-3 | Ag | $Tb_{18.4}Fe_{54.6}Co_7Ag_{20}$ | o | 250 |
| 2-4 | Ag | $Tb_{21}Fe_{62}Co_7Ag_{10}$ | o | 300 |
| 2-5 | Ag | $Tb_{22}Fe_{66}Co_7Ag_5$ | o | 370 |
| 2-6 | Ti | $Gd_{12}Tb_{10}Fe_{61}Co_7Ti_{10}$ | o | 330 |
| 2-7 | Ti | $Gd_{12}Tb_{11}Fe_{65}Co_7Ti_5$ | o | 400 |
| 2-8 | Si | $Tb_{21}Fe_{62}Co_7Si_{10}$ | o | 300 |
| 2-9 | Si | $Tb_{22}Fe_{66}Co_7Si_5$ | o | 370 |

EP 0 282 356 B1

Table 1 (cont'd)

| Sample | Element added to second magnetic layer | Composition of second magnetic layer | Stability of bits 4f | Film thickness (Å) at which instability starts |
|---|---|---|---|---|
| Example 2-10 | Mn | $Tb_{22}Fe_{66}Co_7Mn_5$ | O | 380 |
| 2-11 | B | $Tb_{22}Fe_{66}Co_7B_5$ | O | 360 |
| 2-12 | Pt | $Tb_{22}Fe_{66}Co_7Pt_5$ | O | 380 |
| 2-13 | Ge | $Tb_{21}Fe_{66}Co_7Ge_{10}$ | O | 330 |
| 2-14 | Al | $Tb_{22}Fe_{66}Co_7Al_5$ | O | 380 |
| 2-15 | Cr | $Tb_{22}Fe_{66}Co_7Cr_5$ | O | 380 |

It is seen from Table 1 that in each of the samples in which the non-magnetic element was added to the second magnetic layer, the stability of the bits 4f is improved over that of the comparative example in which no such element was added. As a result, the film thickness of the second magnetic layer can be set to a small thickness and the recording sensitivity is improved.

Example 3

A pregrooved and preformatted polycarbonate disk-shaped substrate was set in a sputtering device having three target sources with a distance to the target being set to 10 cm, and it was rotated at 15 rpm.

Air in the sputtering device was evacuated to $1 \times 10^{-6}$ Torr or less, and a ZnS protection layer was formed to a thickness of 1000 Å in argon by the first target at a sputtering rate of 100 Å/min and a sputtering pressure of $5 \times 10^{-3}$ Torr (0,66 Pa). Then, a TbFe alloy was sputtered in argon by the second target at a sputtering rate of 100 Å/min and a sputtering pressure of $5 \times 10^{-3}$ Torr (0,66 Pa) to form a first magnetic layer having a film thickenss of 300 Å, $T_L$ of approximately 140°C and $H_H$ of approximately 10K Oe and having composition of $Tb_{18}Fe_{82}$ with Fe element sub-lattice magnetization preference.

Then, a TbFeCo alloy was sputtered in argon by the third target at a sputtering pressure of $5 \times 10^{-3}$ Torr and Cu was simultaneously sputtered by the fourth target at a sputtering rate of 100 Å/min to form a second magnetic layer having a film thickness of 500 Å, $T_H$ of approximately 200°C and $H_L$ of approximately 1K Oe and having composition of $Tb_{18.4}Fe_{56}Co_{5.6}Cu_{20}$ with Tb element sub-lattice magnetization preference.

Then, a ZnS protection layer was formed to a thickness of 2000 Å in argon by the first target at a sputtering rate of 100 Å/min and a sputtering pressure of $5 \times 10^{-3}$ Torr (0,66 Pa).

Then, the substrate was bounded to a polycarbonate bonding substrate by hot melt adhesive material to complete a sample of the magneto-optical disk.

The sample was loaded to the recording and reproducing apparatus and the magnetic field generation unit of 2.5K Oe (200000 A/m) was moved at a linear velocity of approximately 8m/sec, and information was recorded by laser powers of 4mW and 8mW while the laser beam having a wavelength of 830 nm focused to approximately 1 μ was modulated at 2 MHz with a duty factor of 50 %. The biasing magnetic field was at 100 Oe (8000 A/m). Then, a laser beam of 1.5mW was irradiated to reproduce a binary signal.

The same experiment was done for the magneto-optical disk having information recorded on the entire surface. The previously recorded signal component was not detected and the overwriting was attained.

Example 4

Sampels of the magneto-optical disk having the same material, film thickness and coercive forces as those of the Example 3 were formed in the same manner as that of the Example 3 except for the types and amounts of non-magnetic elements to be added, the rotation speed of the substrate when the films are formed, and further except that the second magnetic layer was formed by one target for comparison purpose.

In order to examine the stability of the recorded bits 4f of Fig. 3 for each of the samples including the Example 3, the magnitude of the magnetic field at which the magnetizations of the first and second magnetic layers are reversed was checked under the application of an external magnetic field. Then, the stability of the recorded bits 4f without application of the external magnetic field was examined. In Table 2, o indicates stable and x indicates not stable.

For each of the sample shown in Table 2, only the film thickness of the second magnetic layer was changed to prepare a new sample, and the film thickness of the second magnetic layer at which the recorded bits 4f started to be unstable was checked. The results are shown in Table 2.

Table 2

| Sample | Element added to second magnetic layer | Composition of second magnetic layer | Sputter sources of second magnetic layer | Rotation speed of substrate | Stability of bits 4f | Film thickness at which unstability starts (Å) | Curie point (°C) |
|---|---|---|---|---|---|---|---|
| Example 3 | Cu | $Tb_{18.4}Fe_{54.6}Co_7Cu_{20}$ | 2 | 15rpm. | o | 300 | 200 |
| 4-1 | ↓ | ↓ | 1 | 15rpm. | o | 300 | 190 |
| 4-2 | ↓ | ↓ | 2 | 50rpm. | o | 300 | 195 |
| 4-3 | Ti | $Tb_{19}Fe_{52}Co_9Ti_{20}$ | 2 | 15rpm. | o | 350 | 200 |
| 4-4 | ↓ | ↓ | 1 | ↑ | x | – | 160 |
| 4-5 | ↓ | $Tb_{19}Fe_{64}Co_7Ti_{10}$ | 2 | | o | 350 | 190 |
| 4-6 | ↓ | ↓ | 1 | | o | 400 | 180 |
| 4-7 | Cr | $Tb_{19}Fe_{41}Co_{20}Cr_{20}$ | 2 | | o | 350 | 190 |
| 4-8 | ↓ | ↓ | 1 | | x | – | 165 |
| 4-9 | ↓ | $Tb_{19}Fe_{61}Co_{10}Cr_{10}$ | 2 | | o | 350 | 190 |
| 4-10 | ↓ | ↓ | 1 | ↓ | o | 500 | 175 |

EP 0 282 356 B1

Table 2 (cont'd)

| Example | Element added to second magnetic layer | Composition of second magnetic layer | Sputter sources of second magnetic layer | Rotation speed of substrate | Stability of bits 4f | Film thickness at which unstability starts (Å) | Curie point (°C) |
|---|---|---|---|---|---|---|---|
| Example 4-11 | Al | $Tb_{18.5}Fe_{49.5}Co_{12}Al_{20}$ | 2 | 15rpm. | o | 350 | 190 |
| 4-12 | ↓ | ↓ | 1 | ↓ | x | - | 160 |
| 4-13 | | $Tb_{18.5}Fe_{62.5}Co_{9}Al_{10}$ | 2 | | o | 350 | 190 |
| 4-14 | ↓ | ↓ | 1 | ↓ | o | 500 | 185 |

EP 0 282 356 B1

It is seen from Table 2 that in the samples prepared by separate evaporation sources (sputtering sources) for the second magnetic layer for the magnetic material and the non-magnetic material, the drop of the Curie point is small and the stability of the bits 4f is high.

In the samples 4-4, 4-8 and 4-12, the stabilities of bits 4f are x because the coercive force of the second magnetic layer was lowered. The effect of separation of the evaporation sources is remarkable for the material such as Cr or Al which can greatly lower the curie point when it is added to the transition metal.

## Claims

1. A magneto-optical recording medium comprising a first magnetic layer (2) and a second magnetic layer (3) having a higher Curie point (TC) and, at room temperature, a lower coercive force ($H_L$) than those of the first magnetic layer (2), the layers being coupled magnetically together by magnetic exchange coupling forces, in which the coercive forces of both layers (2, 3) are higher than the exchange force acting on each so that, at room temperature and in the absence of an external field, the layers (2, 3) can exist stably in either parallel or anti-parallel magnetisation states, the first layer (2) and the second layer (3) each comprising an alloy of a rare earth element and a transition metal, characterised in that said second layer alloy is alloyed with an element which does not exhibit ferromagnetism at ambient temperature, the non-ferromagnetic element being one or more of the group consisting of Cu, Ag, Ti, Mn, B, Pt, Si, Cr, Al and Ge.

2. A medium according to claim 1 wherein the non-ferromagnetic element makes up 2 - 70 atomic % of the second magnetic layer (3).

3. A medium according to claim 2 wherein the amount of the non-ferromagnetic element is 5 - 20 atomic % of the second magnetic layer (3).

4. A medium according to any preceding claim in which the first layer (2) and the second layer (3) each comprises an alloy selected from a group consisting of GdCo, GdFe, TbFe, DyFe, GdTbFe, TbDyFe, GdTbFe-Co, TbFeCo and GdTbCo.

5. A medium according to any preceding claim wherein the first magnetic layer (2) has a Curie point lying between 70 and 180°C, and the second magnetic layer (3) has a Curie point lying between 100 and 400°C, and being higher than that of said first layer (2).

6. A medium according to any preceding claim, wherein the first magnetic layer (2) has a coercive force of 240-8000 KA/m (3 to 10 K Oe), and the second magnetic layer (3) has a coercive force of 40-160 KA/m (0.5 to 2K Oe).

7. A magneto-optical recording disc comprising a medium according to any preceding claim.

8. A medium according to any of claims 1-6 further comprising at least one protection layer (11, 12) comprising a non magnetic material.

9. A method of manufacturing a magneto-optical recording medium according to claim 1 comprising the steps of depositing each of said layers in turn onto a substrate (1), the second magnetic layer being formed by simultaneously evaporation depositing rare earth element - transition metal material and non-ferromagnetic element material from separate, spaced evaporation sources.

10. A recording method using a recording medium according to any one of claims 1-8 comprising the steps of:

    (a) applying (4b) a first magnetic field large enough to magnetize said second magnetic layer (3) in one direction but not large enough to reverse magnetization of said first magnetic layer (2), and
    (b) selectively effecting a first type of recording or a second type of recording depending on the power of a light beam controlled by an information signal;

    in said first type of recording (4c), using a light beam having a power large enough to heat said recording medium to the vicinity of the Curie point of said first magnetic layer (2) while a second field bias is applied so that the magnetization of said first magnetic layer (2) adopts a direction stable relative to said second magnetic layer (3) while the direction of magnetization of said second magnetic layer (3) is kept unchanged; and

in said second type of recording (4d), using a light beam having a power large enough to heat said recording medium to the vicinity of a Curie point of said second magnetic layer (3) while a bias field is applied so that the magnetization of said second magnetic layer (3) is reversed and said first magnetic layer (2) is magnetized in a direction stable relative to said second magnetic layer (3).


**Patentansprüche**

1. Optomagnetisches Aufzeichnungsmedium mit einer ersten Magnetschicht (2) und einer zweiten Magnetschicht (3) mit einer höheren Curietemperatur (TC) und bei Zimmertemperatur einer geringeren Koerzitivfeldstärke ($H_L$) als die erste Magnetschicht (2), wobei die Magnetschichten durch magnetische Austausch-Koppelkräfte magnetisch miteinander gekoppelt sind, bei denen die Koerzitivkräfte beider Magnetschichten (2, 3) höher als die auf jede wirkende Austauschkraft sind, so daß bei Zimmertemperatur und bei Fehlen eines äußeren Feldes die Magnetschichten (2, 3) entweder in parallelen oder antiparallelen Magnetisierungszuständen beständig bestehen können, wobei die erste Magnetschicht (2) und die zweite Magnetschicht (3) jeweils eine Legierung aus einem Seltenerdenelement und einem Übergangsmetall aufweisen,
**dadurch gekennzeichnet, daß**
die Legierung der zweiten Magnetschicht mit einem Element legiert ist, das bei Umgebungstemperaturen keinen Ferromagnetismus aufweist, wobei das nicht-ferromagnetische Element eines oder mehrere aus der Gruppe ist, die aus Cu, Ag, Ti, Mn, B, Pt, Si, Cr, Al und Ge besteht.

2. Aufzeichnungsmedium nach Anspruch 1, **dadurch gekennzeichnet, daß** das nicht-ferromagnetische Element 2 bis 70 % des Atomanteils der zweiten Magnetschicht (3) beträgt.

3. Aufzeichnungsmedium nach Anspruch 2, **dadurch gekennzeichnet, daß** die Menge des nicht-ferromagnetischen Elementes 5 bis 20 % des Atomanteils der zweiten Magnetschicht (3) beträgt.

4. Aufzeichnungsmedium nach einem der vorangehenden Ansprüche, **dadurch gekennzeichnet, daß** die erste Magnetschicht (2) und die zweite Magnetschicht (3) jeweils eine Legierung aufweisen, die aus einer Gruppe ausgewählt wird, die aus GdCo, GdFe, TbFe, DyFe, GdTbFe, TbDyFe, GdTbFeCo, TbFeCo und GdTbCo besteht.

5. Aufzeichnungsmedium nach einem der vorangehenden Ansprüche, **dadurch gekennzeichnet, daß** die erste Magnetschicht (2) eine Curietemperatur aufweist, der zwischen 70 und 180 °C liegt, und die zweite Magnetschicht (3) eine Curietemperatur aufweist, die zwischen 100 und 400 °C liegt und höher als die der ersten Magnetschicht (2) ist.

6. Aufzeichnungsmedium nach einem der vorangehenden Ansprüche, **dadurch gekennzeichnet, daß** die erste Magnetschicht (2) eine Koerzitivfeldstärke von 240 bis 8000 kA/m (3 bis 10 kOe) und die zweite Magnetschicht (3) eine Koerzitivfeldstärke von 40 bis 160 kA/m (0,5 bis 2 kOe) aufweisen.

7. Optomagnetische Aufzeichnungsscheibe mit einem Aufzeichnungsmedium nach einem der vorangehenden Ansprüche.

8. Aufzeichnungsmedium nach einem der Ansprüche 1 bis 6, **gekennzeichnet durch** zumindest eine Schutzschicht (11, 12), die ein nichtmagnetisches Material aufweist.

9. Verfahren zum Herstellen eines optomagnetischen Aufzeichnungsmediums nach Anspruch 1, mit den Schritten des Aufbringens jeder Schicht nacheinander auf ein Substrat (1), wobei die zweite Magnetschicht durch gleichzeitiges Aufdampfen eines Materials eines Seltenerdenelement-Übergangsmetalls und eines Materials eines nicht-ferromagnetischen Elements aus getrennten, beabstandeten Aufdampfquellen gebildet wird.

10. Aufzeichnungsverfahren unter Verwendung eines Aufzeichnungsmediums nach einem der Ansprüche 1 bis 8 mit den Schritten
(a) eines Erzeugens (4b) eines ersten Magnetfeldes, das stark genug ist, um die zweite Magnetschicht (3) in einer Richtung zu magnetisieren, aber nicht stark genug ist, die Magnetisierung der ersten Magnetschicht (2) umzukehren, und

(b) eines wahlweisen Ausführens einer ersten Art der Aufzeichnung oder einer zweiten Art der Aufzeichnung in Abhängigkeit von der Leistung eines durch ein Informationssignal gesteuerten Lichtstrahls,

wobei bei der ersten Art der Aufzeichnung (4c) ein Lichtstrahl mit einer Leistung verwendet wird, die groß genug ist, um das Aufzeichnungsmedium ungefähr auf die Curietemperatur der ersten Magnetschicht (2) zu erwärmen, während ein zweites vormagnetisierendes Feld erzeugt wird, so daß die Magnetisierung der ersten Magnetschicht (2) eine Richtung annimmt, die bezüglich der zweiten Magnetschicht (3) beständig ist, während die Richtung der Magnetisierung der zweiten Magnetschicht (3) unverändert gelassen wird, und

wobei bei der zweiten Art der Aufzeichnung (4d) ein Lichtstrahl mit einer Leistung verwendet wird, die groß genug ist, um das Aufzeichnungsmedium ungefähr auf die Curietemperatur der zweiten Magnetschicht (3) zu erwärmen, während ein vormagnetisierendes Feld erzeugt wird, so daß die Magnetisierung der zweiten Magnetschicht (3) umgekehrt und die erste Magnetschicht (2) in eine Richtung magnetisiert wird, die bezüglich der zweiten Magnetschicht (3) beständig ist.


## Revendications

1. Support d'enregistrement magnéto-optique comportant une première couche magnétique (2) et une seconde couche magnétique (3) ayant un point de Curie (TC) supérieur et, à la température ambiante, une force coercitive ($H_L$) inférieure à ceux de la première couche magnétique (2), les couches étant couplées magnétiquement l'une à l'autre par des forces de couplage magnétique d'échange, support dans lequel les forces coercitives des deux couches (2, 3) sont supérieures à la force d'échange agissant sur chacune d'elles afin que, à la température ambiante et en l'absence d'un champ extérieur, les couches (2, 3) puissent exister de façon stable dans des états d'aimantation parallèle ou antiparallèle, la première couche (2) et la seconde couche (3) comprenant chacune un alliage d'un élément du type terre rare et d'un métal de transition, caractérisé en ce que l'alliage de ladite seconde couche est allié à un élément qui ne présente pas de ferromagnétisme à la température ambiante, l'élément non ferromagnétique étant un ou plusieurs des éléments du groupe constitué de Cu, Ag, Ti, Mn, B, Pt, Si, Cr, Al et Ge.

2. Support selon la revendication 1, dans lequel l'élément non ferromagnétique constitue 2 à 70 % en valeur atomique de la seconde couche magnétique (3).

3. Support selon la revendication 2, dans lequel la quantité de l'élément non ferromagnétique est de 5 à 20 % en valeur atomique de la seconde couche magnétique (3).

4. Support selon l'une quelconque des revendications précédentes, dans lequel la première couche (2) et la seconde couche (3) comprennent chacune un alliage choisi dans un groupe constitué de GdCo, GdFe, TbFe, DyFe, GdTbFe, TbDyFe, GdTbFeCo, TbFeCo et GdTbCo.

5. Support selon l'une quelconque des revendications précédentes, dans lequel la première couche magnétique (2) présente un point de Curie compris entre 70 et 180°C, et la seconde couche magnétique (3) présente un point de Curie compris entre 100 et 400°C et était plus élevé que celui de ladite première couche (2).

6. Support selon l'une quelconque des revendications précédentes, dans lequel la première couche magnétique (2) possède une force coercitive de 240-8000 RA/m (3 à 10 ROe), et la seconde couche magnétique (3) possède une force coercitive de 40-160 RA/m (0,5à 2 ROe).

7. Disque d'enregistrement magnéto-optique comportant un support selon l'une quelconque des revendications précédentes.

8. Support selon l'une quelconque des revendications 1 à 6, comportant en outre au moins une couche protectrice (11, 12) comprenant une matière non magnétique.

9. Procédé de fabrication d'un support d'enregistrement magnéto-optique selon la revendication 1, comprenant les étapes qui consistent à déposer tour à tour chacune desdites couches sur un substrat (1) , la seconde couche magnétique étant formée par dépôt par évaporation simultanée d'un élément du type terre rare - d'une matière du type métal de transition et d'une matière non ferromagnétique à partir de sources séparées et espacées d'évaporation.

10. Procédé d'enregistrement utilisant un support d'enregistrement selon l'une quelconque des revendications 1-8, comprenant les étapes qui consistent :

(a) à appliquer (4b) un premier champ magnétique assez important pour aimanter ladite seconde couche magnétique (3) dans un sens, mais pas assez important pour une aimantation inverse de ladite première couche magnétique (2), et

(b) à effectuer sélectivement un premier type d'enregistrement ou un second type d'enregistrement suivant la puissance d'un faisceau lumineux commandé par un signal d'information ;

dans ledit premier type d'enregistrement (4c), à utiliser un faisceau lumineux ayant une puissance assez grande pour chauffer ledit support d'enregistrement au voisinage du point de Curie de ladite première couche magnétique (2) tandis qu'une polarisation par un second champ est appliquée afin que l'aimantation de ladite première couche magnétique (2) adopte une direction stable par rapport à ladite seconde couche magnétique (3) tandis que la direction d'aimantation de ladite seconde couche magnétique (3) est maintenue inchangée ; et

dans ledit second type d'enregistrement (4d), à utiliser un faisceau lumineux ayant une puissance assez grande pour chauffer ledit support d'enregistrement au voisinage d'un point de Curie de ladite seconde couche magnétique (3) tout en appliquant un champ de polarisation afin que l'aimantation de ladite seconde couche magnétique (3) soit inversée et que ladite première couche magnétique (2) soit aimantée dans une direction stable par rapport à ladite seconde couche magnétique (3).

# Fig. 1

# Fig. 2

COERCIVE FORCE

CHARACTERISTIC OF FIRST MAGNETIC LAYER

$H_H$

$H_L$

CHARACTERISTIC OF SECOND MAGNETIC LAYER

NORMAL TEMPERATURE

$T_L$

$T_H$

TEMPERATURE

# Fig. 3

4a    4b    4c    4d    4e    4f

2

3

2

3

*Fig. 4*

*Fig. 5*

*Fig. 6*